# EUROPÄISCHE PATENTANMELDUNG

(11) **EP 2 636 616 A1**
(43) Veröffentlichungstag der Anmeldung: **11.09.2013**
(21) Anmeldenummer: 13156010.4
(22) Anmeldetag: 20.02.2013
(51) Int. Cl.: B65G 1/07

(54) **Geschirrspendevorrichtung**

(30) Priorität: 08.03.2012 DE 102012203681
(71) Anmelder: BLANCO Professional GmbH + Co KG, 75038 Oberderdingen (DE)
(72) Erfinder: Vincon, Andre, 75038 Oberderdingen (DE)
(74) Vertreter: Hoeger, Stellrecht & Partner Patentanwälte

(57) **Zusammenfassung**

Um eine Geschirrspendevorrichtung zur Aufnahme eines Geschirrstapels, umfassend ein Gehäuse und einen in einer Höhenrichtung verschiebbaren Geschirrstapelträger, auf welchen der Geschirrstapel aufsetzbar ist, zu schaffen, deren Funktionsumfang erweitert ist, wird vorgeschlagen, dass die Geschirrspendevorrichtung eine Signalgebeeinrichtung zum Geben eines von der Höhenposition des Geschirrstapelträgers und/oder von einer Menge an Geschirrteilen in dem Geschirrstapel abhängigen Signals umfasst.

## Beschreibung

Die vorliegende Erfindung betrifft eine Geschirrspendevorrichtung zur Aufnahme eines Geschirrstapels, umfassend ein Gehäuse und einen in einer Höhenrichtung verschiebbaren Geschirrstapelträger, auf welchen der Geschirrstapel aufsetzbar ist.

Derartige Geschirrspendevorrichtungen sind aus dem Stand der Technik bekannt, beispielsweise aus der DE 195 00 532 C1.

Bei den bekannten Geschirrspendevorrichtungen ist von außerhalb der Geschirrspendevorrichtung der Füllstand der Geschirrspendevorrichtung nur schwer erkennbar.

Der vorliegenden Erfindung liegt die Aufgabe zugrunde, eine Geschirrspendevorrichtung der eingangs genannten Art zu schaffen, deren Funktionsumfang erweitert ist.

Diese Aufgabe wird erfindungsgemäß dadurch gelöst, dass die Geschirrspendevorrichtung eine Signalgebeeinrichtung zum Geben eines, von der Höhenposition des Geschirrstapelträgers und/oder von einer Menge an Geschirrteilen in dem Geschirrstapel abhängigen, Signals umfasst.

Der Begriff Geschirr wird in dieser Beschreibung und in den beigefügten Ansprüchen als Gattungsbegriff für alle stapelbaren Geschirrteile verwendet, die beispielsweise in Gaststätten oder Großverpflegungseinrichtungen wie Krankenhäusern und Kantinen Verwendung finden und aufeinandergestapelt für eine Speisenausgabe zum Einsatz kommen können; dabei kann es sich beispielsweise um Teller, Untertassen, plattenartige oder schalenartige Geschirrteile handeln, gegebenenfalls aber auch um Suppentassen, stapelbare Becher sowie Tabletts.

"Von außerhalb der Geschirrspendevorrichtung sichtbar" und "von außen sichtbar" wird in dieser Beschreibung und in den beigefügten Ansprüchen in dem Sinne verwendet, dass etwas in einer im wesentlichen horizontalen Blickrichtung, insbesondere einer Blickrichtung einer Bedienungsperson der Geschirrspendevorrichtung, die in einigen Metern Entfernung steht, sichtbar ist.

Durch das Erzeugen oder Geben eines, von der Höhenposition des Geschirrstapelträgers und/oder von einer Menge an Geschirrteilen in dem Geschirrstapel abhängigen, Signals kann aus dem Signal auf die Höhenposition des Geschirrstapelträgers und/oder auf die Menge an Geschirrteilen in dem Geschirrstapel geschlossen werden. Somit kann eine Bedienungsperson der Geschirrspendevorrichtung, beispielsweise Personal, das in der Essensausgabe einer Kantine arbeitet und für die Befüllung der Geschirrspendevorrichtung zuständig ist, rechtzeitig erkennen, wann ein Nachfüllen der Geschirrspendevorrichtung notwendig ist.

Vorzugsweise ist die Menge an Geschirrteilen in dem Geschirrstapel durch die Anzahl der Geschirrteile in dem Geschirrstapel definiert.

Besonders günstig ist es, wenn die Höhenrichtung im Wesentlichen vertikal verläuft.

Eine günstige Lösung sieht vor, dass die Signalgebeeinrichtung das Signal erzeugt, wenn der Geschirrstapelträger, insbesondere dessen Höhenposition, sich in einem Signalbereich befindet.

Ferner ist es vorteilhaft, wenn das von der Signalgebeeinrichtung gegebene Signal ein einmaliges Füllstandssignal umfasst, welches die Signalgebeeinrichtung gibt, wenn der Geschirrstapelträger in den Signalbereich eintritt und/oder eine Mindestmenge an Geschirrteilen in dem Geschirrstapel unterschritten wird. Beispielsweise kann das einmalige Füllstandssignal ein optisches Signal, wie ein Blinken, oder ein akustisches Signal, wie ein Klingeln, sein.

Günstig ist es, wenn das von der Signalgebeeinrichtung gegebene Signal ein andauerndes Füllstandssignal umfasst, welches die Signalgebeeinrichtung gibt, wenn der Geschirrstapelträger in den Signalbereich eintritt und/oder eine Mindestmenge an Geschirrteilen in dem Geschirrstapel unterschritten wird. Das andauernde Füllstandssignal kann beispielsweise eine vorgegebene Zeitdauer aufweisen.

Ferner ist es Günstig, wenn das von der Signalgebeeinrichtung gegebene Signal ein andauerndes Füllstandssignal umfasst, welches die Signalgebeeinrichtung gibt, solange der Geschirrstapelträger sich in dem Signalbereich befindet und/oder eine Mindestmenge an Geschirrteilen in dem Geschirrstapel erreicht oder unterschritten ist.

In diesem Fall weist das andauernde Füllstandsignal beispielsweise eine Zeitdauer auf, die mit dem Eintreten des Geschirrstapelträgers in den Signalbereich und/oder mit dem Erreichen oder Unterschreiten der Mindestmenge an Geschirrteilen beginnt, und die mit dem Austreten des Geschirrstapelträgers aus dem Signalbereich und/oder mit dem erneuten Erreichen oder Überschreiten der Mindestmenge an Geschirrteilen im Geschirrstapel endet.

Alternativ oder ergänzend hierzu kann das von der Signalgebeeinrichtung gegebene Signal ein permanentes Füllstandsignal umfassen, welches die Signalgebeeinrichtung dauerhaft gibt, und aus dem auf den Füllstand geschlossen werden kann.

So kann gezielt ein Signal erzeugt werden, das der Bedienungsperson mitteilt, dass die Geschirrspendevorrichtung mit weiteren Geschirrteilen bestückt werden sollte.

Besonders günstig ist es, dass die Signalgebeeinrichtung mindestens ein Signalelement umfasst, welches permanent oder zeitweise mit dem Geschirrstapelträger gekoppelt ist. Hierdurch wird die Bewegung des Geschirrstapelträgers zumindest zeitweise auf das Signalelement übertragen, so dass aus der Position des Signalelements auf die Position des Geschirrstapelträgers schließbar ist.

Insbesondere ist es von Vorteil, dass die Signalgebeeinrichtung mindestens ein Signalelement umfasst, welches zumindest dann mit dem Geschirrstapelträger gekoppelt ist, wenn der Geschirrstapelträger sich in dem Signalbereich befindet. Somit wird das Signalelement dann mit dem Geschirrstapelträger mitbewegt, wenn dieser sich im Signalbereich befindet, so dass aufgrund der Position des Signalelements auf die Höhenposition des Geschirrstapelträgers innerhalb des Signalbereichs geschlossen werden kann.

Bei einer besonderen Ausgestaltung der Erfindung ist vorgesehen, dass die Signalgebeeinrichtung mindestens ein Signalelement umfasst, welches zumindest zeitweise nicht mit dem Geschirrstapelträger gekoppelt ist, wenn der Geschirrstapelträger sich außerhalb des Signalbereichs befindet. Auf diese Weise können unnötige Bewegungen des Signalelements vermindert werden wodurch die Lebensdauer des Signalelements erhöht werden kann.

Besonders günstig ist es, wenn die Signalgebeeinrichtung mindestens ein Signalelement umfasst, welches ein mit dem Geschirrstapelträger gekoppeltes Signalband umfasst, da somit das Signalband mit dem Geschirrstapelträger mitbewegt wird und folglich aus der Position des Signalbands auf die Höhenposition des Geschirrstapelträgers geschlossen werden kann.

Alternativ oder ergänzend hierzu kann vorgesehen sein, dass das Signalelement, beispielsweise ein Signalband, ringförmig ausgebildet ist und insbesondere zwischen mindestens zwei Umlenkrollen verläuft.

Ferner kann vorgesehen sein, dass das Signalelement, beispielsweise ein Signalband, mindestens zwei Bereiche, vorzugsweise mindestens drei Bereiche, aufweist, die durch unterschiedliche Kennzeichnung voneinander unterscheidbar sind.

Die Kennzeichnung der verschiedenen Bereiche des Signalelements kann sich beispielsweise hinsichtlich der Farbe, hinsichtlich des Grauwerts, hinsichtlich der Art und/oder Dichte einer Schraffur, hinsichtlich der Art eines Musters, hinsichtlich der Oberflächenbeschaffenheit, hinsichtlich der Art einer Prägung, hinsichtlich einer Beschriftung des Signalelements, hinsichtlich der Transparenz des Signalelements oder hinsichtlich der Breite des Signalelements voneinander unterscheiden.

Ferner kann vorgesehen sein, dass sich eine Kennzeichnung längs des Signalelements zumindest abschnittsweise kontinuierlich verändert.

Darüber hinaus kann vorgesehen sein, dass die Kennzeichnung des Signalelements Markierungen für die Anzahl der Restgeschirrteile in der Geschirrspendevorrichtung umfasst.

Wenn das Signalelement ringförmig ausgebildet ist und zwischen zwei Umlenkrollen verläuft, läuft es um diese um, wenn der Geschirrstapelträger sich in Höhenrichtung bewegt, und wenn das Signalelement mindestens zwei Bereiche, vorzugsweise mindestens drei Bereiche aufweist, die eine unterschiedliche Kennzeichnung tragen, kann eine Bedienungsperson der Geschirrspendevorrichtung aus dem Bereich des Signalelements, der von außerhalb der Geschirrspendevorrichtung sichtbar, erkennen, wann die Geschirrspendevorrichtung mit neuen Geschirrteilen bestückt werden sollte.

Wenn das Signalelement eine sich längs des Signalelements kontinuierlich verändernde Kennzeichnung aufweist, kann aus dem Bereich des Signalelements der von außerhalb der Geschirrspendevorrichtung sichtbar ist auf die Höhenposition des Geschirrstapelträgers geschlossen werden.

Eine weitere günstige Lösung sieht vor, dass die Signalgebeeinrichtung ein Signalelement umfasst und dass die Geschirrspendevorrichtung eine Kopplungsvorrichtung zum Koppeln des Signalelements mit dem Geschirrstapelträger umfasst.

Günstig ist es, wenn das Signalelement sich mit dem Geschirrstapelträger mitbewegt, wenn der Geschirrstapelträger innerhalb eines Kopplungsbereichs liegt, und sich nicht mit dem Geschirrstapelträger mitbewegt, wenn der Geschirrstapelträger außerhalb des Kopplungsbereichs liegt. So kann das Signalelement die Höhenposition des Geschirrstapelträgers anzeigen, ohne den gesamten Weg zurücklegen zu müssen, den der Geschirrstapelträger zwischen einer Anfangs-Höhenposition des Geschirrstapelträgers, in welcher die Geschirrspendevorrichtung voll ist, und einer End-Höhenposition des Geschirrstapelträgers, in welcher die Geschirrspendevorrichtung leer ist, zurücklegt.

Für eine berührungslose Kopplung zwischen dem Signalelement und dem Geschirrstapelträger ist es vorteilhaft, wenn die Kopplungsvorrichtung mindestens ein erstes Magnetelement umfasst, da somit die Kopplung mittels magnetischer Kräfte erfolgen kann.

Das Magnetelement kann ein dauermagnetisches Material und/oder einen Elektromagneten umfassen.

Günstig ist es, wenn die Kopplungsvorrichtung ein Kopplungselement mit einem Magnetelement, insbesondere ein kugelförmiges Kopplungselement umfasst, an dem sich das Signalelement abstützt. Durch die Verwendung eines kugelförmigen Kopplungselements wird die Wahrscheinlichkeit verringert, dass sich das Signalelement und/oder das Kopplungselement verkantet.

Eine weitere vorteilhafte Lösung sieht vor, dass die Kopplungsvorrichtung ein mechanisches Element zum mechanischen Koppeln des Signalelements mit dem Geschirrstapelträger umfasst. Hierdurch kann eine mechanische Kopplung zwischen dem Signalelement und dem Geschirrstapelträger erfolgen.

Die mechanische Kopplung kann beispielsweise durch Formschluss, durch Verrasten, durch Abstützen, durch Mitnahme oder durch Aufliegen erfolgen. Insbesondere ist die Mechanische Kopplung lösbar.

Eine lösbare mechanische Kopplung lässt sich beispielsweise in besonders einfacher Weise erzielen, wenn die Kopplungsvorrichtung eine Abstützfläche aufweist, an der sich ein Koppelelement des Signalelements abstützen kann.

Weiter ist es günstig, wenn die Signalgebeeinrichtung mindestens ein Signalelement umfasst, welches permanent oder zeitweise eine Öffnung des Gehäuses durchgreift, so dass das Signalelement von außerhalb der Geschirrspendevorrichtung sichtbar ist.

Vorzugsweise durchgreift das mindestens eine Signalelement die Öffnung des Gehäuses, wenn der Geschirrstapelträger in dem Signalbereich liegt, so dass dann das Signalelement von außerhalb der Geschirrspendevorrichtung sichtbar ist.

Besonders bevorzugt ist es, wenn die Signalgebeeinrichtung mindestens ein Signalelement umfasst, welches eine vorzugsweise zusätzlich zu einer Geschirrentnahmeöffnung der Geschirrspendevorrichtung vorgesehene Signalöffnung des Gehäuses durchgreift, wenn der Geschirrstapelträger sich in dem Signalbereich befindet.

Eine besonders gute Sichtbarkeit des Signals wird erreicht, wenn die Signalgebeeinrichtung mindestens zwei Signalelemente umfasst, da somit in der Regel wenigstens ein Signalelement nicht durch den Geschirrstapel verdeckt ist.

Vorzugsweise umfasst die Signalgebeeinrichtung mindestens vier Signalelemente. Dabei kann beispielsweise in jeder Ecke des Gehäuses jeweils ein Signalelement angeordnet sein, so dass aus allen Blickrichtungen die Sichtbarkeit wenigstens eines Signalelements wahrscheinlich ist.

Vorzugsweise weist das Gehäuse für jedes Signalelement eine eigene, vorzugsweise zusätzlich zu einer Geschirrentnahmeöffnung der Geschirrspendevorrichtung vorgesehene, Signalöffnung auf, welche von dem jeweiligen Signalelement durchgreifbar ist.

Eine besonders günstige Lösung sieht vor, dass die Signalgebeeinrichtung mindestens ein Signalelement umfasst, welches an dem Geschirrstapelträger angeordnet ist. Somit bewegt sich das Signalelement mit dem Geschirrstapelträger mit, wodurch das Geben eines von der Höhenposition des Geschirrstapelträgers abhängigen Signals in besonders einfacher Weise ermöglicht wird.

Besonders vorteilhaft ist es, wenn die Signalgebeeinrichtung einen Positionssensor zum Erfassen der Höhenposition des Geschirrstapelträgers umfasst, da somit das Signal abhängig von der Höhenposition des Geschirrstapelträgers gesteuert und/oder geregelt werden kann.

Der Positionssensor zum Erfassen der Höhenposition kann insbesondere einen Reed-Kontakt, einen Magnetfeldsensor, einen induktiven Näherungssensor, einen optischen Sensor und/oder einen mechanischen Sensor umfassen.

Besonders bevorzugt ist es, dass die Signalgebeeinrichtung mindestens ein Signalelement umfasst, welches von außerhalb der Geschirrspendevorrichtung permanent oder zeitweise sichtbar ist.

Wenn die Signalgebeeinrichtung mindestens ein Signalelement umfasst, welches von außerhalb der Geschirrspendevorrichtung permanent sichtbar ist, wird vorzugsweise durch Verändern des Aussehens des mindestens einen Signalelements, beispielsweise durch Ein- oder Ausschalten einer Signallampe, das Füllstandssignal erzeugt.

Wenn die Signalgebeeinrichtung mindestens ein Signalelement umfasst, welches von außerhalb der Geschirrspendevorrichtung zeitweise sichtbar ist, wird das Signalelement vorzugsweise dann sichtbar, wenn der Geschirrstapelträger in den Signalbereich eintritt und/oder eine Mindestmenge an Geschirrteilen in dem Geschirrstapel unterschritten wird und wird das Signalelement vorzugsweise dann nicht sichtbar, wenn der Geschirrstapelträger aus dem Signalbereich austritt und/oder eine Mindestmenge an Geschirrteilen in dem Geschirrstapel überschritten wird.

Die Sichtbarkeit des Signalelements kann beispielsweise dadurch gesteuert werden, dass das Signalelement hinter einen Sichtschutz bewegt werden kann, oder beispielsweise dadurch, dass der Sichtschutz vor das Signalelement bewegt werden kann.

Eine weitere bevorzugte Lösung sieht vor, dass die Signalgebeeinrichtung ein Sichtfenster umfasst, durch welches von außerhalb der Geschirrspendevorrichtung der Geschirrstapelträger und/oder ein Signalelement sichtbar ist. Hierdurch kann der Füllstand der Geschirrspendevorrichtung durch das Sichtfenster erkannt werden.

Vorzugsweise ist das Sichtfenster mit einer transparenten oder zumindest teilweise transparenten Abdeckung versehen. So können Verschmutzungen in der Geschirrspendevorrichtung vermieden werden, ohne dabei die Sichtbarkeit des Geschirrstapelträgers und/oder des Signalelements zu beeinträchtigen.

Die Signalgebeeinrichtung kann insbesondere zur Erzeugung eines Nachfüllsignals oder einer Geschirrteilendanzeige (Füllstandsanzeige), insbesondere eine Tellerendanzeige, von Geschirrteilen verwendet werden.

Die Geschirrspendevorrichtung kann beispielsweise als Spender verwendet werden, der eine Stapelplattform umfasst.

Günstigerweise werden auf dieser Stapelplattform die jeweiligen Geschirrteile aufgestellt.

Vorteilhafterweise ist an der Stapelplattform ein Nachfüllsignalelement angebracht. Das Nachfüllsignalelement weist beispielsweise einen Rundstab auf, der insbesondere mit einer PVC (Polyvinylchlorid)-Kappe in einer Signalfarbe, beispielsweise rot, überzogen ist.

Vorzugsweise ist die Stapelplattform im Wesentlichen senkrecht beweglich.

Über Zugfedern mit unterschiedlicher Federrate kann beispielsweise die Höhe der Stapelplattform bei unterschiedlichen Geschirrteilen so eingestellt werden, dass eine leichte Entnahme der Geschirrteile (beispielsweise Teller) sichergestellt ist. Dabei befindet sich die Stapelplattform unten am Geräteboden, wenn der Spender voll beladen ist. Werden Teller entnommen, bewegt sich die Stapelplattform nach oben.

Günstigerweise steht das Nachfüllsignalelement über eine Abdeckung hinaus, wenn sich die Oberkante der Stapelplattform weniger als beispielsweise ungefähr 22 cm unterhalb einer Oberkante der Abdeckung befindet. Dadurch wird signalisiert, dass sich je nach Geschirrtyp und Federeinstellung noch beispielsweise ungefähr 15 Teller im Spender befinden.

Vorzugsweise ist an den vier Ecken der Stapelplattform je ein Nachfüllsignalelement angebracht. Dadurch kann von allen Seiten der Füllstand des Spenders eingesehen werden.

Bei einem weiteren vorteilhaften Spender ist oberhalb der Abdeckung des Spenders und unten am Boden des Spenders jeweils eine Umlenkrolle angebracht, über die ein Band oder ein Riemen (beispielsweise ein Keilriemen oder ein Zahnriemen), im folgenden Signalband genannt, geführt ist.

Das Signalband ist vorzugsweise mit der Stapelplattform verbunden und bewegt sich mit der Stapelplattform mit.

Günstigerweise ist das Signalband dreifarbig ausgeführt. Grün bedeutet beispielsweise, dass das Gerät bestückt ist. Orange bedeutet beispielsweise, dass nur noch eine geringe Anzahl an Geschirrteilen im Spender ist und dass ein besser bestückter Spender bereitgestellt werden sollte. Rot bedeutet beispielsweise, dass nur noch wenige Geschirrteile im Spender sind und dass der Spender sofort wiederbefüllt oder durch einen besser bestückten Spender ersetzt werden soll.

Bei einem weiteren günstigen Spender umfasst der Spender einen Reed-Kontakt. Erreicht die Stapelplattform beim Hochfahren den Reed-Kontakt, wird günstigerweise eine Signallampe aktiviert. Beispielsweise ist ein Netz- oder Akku-Betrieb der Signallampe möglich.

Ferner ist es vorteilhaft, wenn die Stapelplattform und das Nachfüllsignalelement entkoppelt sind, das Nachfüllsignalelement oben am Spender angebaut und/oder geführt ist und beim Hochfahren der Stapelplattform das Nachfüllsignalelement beim Erreichen einer bestimmten Stapelhöhe durch die Stapelplattform nach oben bewegt wird.

Besonders günstig ist es, wenn der Spender ein über die Abdeckung stehendes transparentes Rohr, beispielsweise ein Kunststoffrohr, umfasst, in dem eine Kugel, insbesondere eine Stahlkugel, vertikal bewegbar ist, mit welcher das Nachfüllsignalelement, beispielsweise ein Kunststoffstab, bewegbar ist.

Vorteilhafterweise ist an der Stapelplattform ein Magnet angeordnet, der die Stahlkugel bewegt. Hierdurch steht das Nachfüllsignalelement über die Abdeckung hinaus, wenn die Stapelplattform eine bestimmte Position erreicht, und zeigt dadurch an, dass sich nur noch wenige Geschirrteile im Spender befinden.

Alternativ oder ergänzend hierzu kann die Außenwand des Spenders einen vertikalen Ausbruch aufweisen, durch welchen der Füllstand des Spenders erkennbar ist.

Vorzugsweise ist der Ausbruch durch eine transparente Scheibe staubdicht verschlossen.

Weitere Merkmale und Vorteile der Erfindung sind Gegenstand der nachfolgenden Beschreibung mehrerer Ausführungsbeispiele.

In den Zeichnungen zeigen:
- Fig. 1: eine perspektivische Darstellung einer Geschirrspendevorrichtung;
- Fig. 2: einen vertikalen Schnitt durch die Geschirrspendevorrichtung aus Fig. 1 längs der Linie 2-2 in Fig. 1;
- Fig. 3: eine vergrößerte Darstellung des Bereichs I aus Fig. 2;
- Fig. 4: einen vertikalen Schnitt durch die Geschirrspendevorrichtung aus Fig. 1 längs der Linie 4-4 in Fig. 1, mit darin gestapelten Geschirrteilen, beispielsweise Tellern;
- Fig. 5: einen vertikalen Schnitt durch die Geschirrspendevorrichtung aus Fig. 1 längs der Linie 2-2 in Fig. 1, wobei der Geschirrstapelträger sich in einer mittleren Höhenposition befindet;
- Fig. 6: einen der Fig. 4 entsprechenden vertikalen Schnitt durch die Geschirrspendevorrichtung, wobei die Geschirrspendevorrichtung mit Geschirrteilen, beispielsweise Tellern, bestückt ist und der Geschirrstapelträger sich in einer mittleren Höhenposition befindet;
- Fig. 7: eine perspektivische Darstellung der Geschirrspendevorrichtung, wobei der Geschirrstapelträger sich in einem Signalbereich befindet, so dass Signalelemente einer Signalgebeeinrichtung der Geschirrspendevorrichtung sichtbar sind;
- Fig. 8: einen vertikalen Schnitt durch die Geschirrspendevorrichtung aus Fig. 7 längs der Linie 8-8 in Fig. 7;
- Fig. 9: eine vergrößerte Darstellung des Bereichs II aus Fig. 8;
- Fig. 10: eine perspektivische Darstellung des Geschirrstapelträgers mit daran angeordneten Signalelementen;
- Fig. 11: eine perspektivische Explosionszeichnung des Geschirrstapelträgers aus Fig. 10;
- Fig. 12: einen vertikalen Schnitt durch den Geschirrstapelträgers aus Fig. 10 längs der Linie 12-12 in Fig.10;
- Fig. 13: eine schematische Darstellung eines zweiten Ausführungsbeispiels einer Geschirrspendevorrichtung mit einem bandförmigen Signalelement;
- Fig. 14: eine schematische Darstellung eines dritten Ausführungsbeispiels einer Geschirrspendevorrichtung mit einem magnetisch an den Geschirrstapelträger koppelbaren Signalelement, im nicht gekoppelten Zustand;
- Fig. 15: eine schematische Darstellung des dritten Ausführungsbeispiels der Geschirrspendevorrichtung aus Fig. 14, wobei das Signalelement an den Geschirrstapelträger gekoppelt ist;
- Fig. 16: eine schematische Darstellung eines vierten Ausführungsbeispiels einer Geschirrspendevorrichtung mit einem mechanisch an den Geschirrstapelträger koppelbaren Signalelement, im nicht gekoppelten Zustand;
- Fig. 17: eine schematische Darstellung des vierten Ausführungsbeispiels der Geschirrspendevorrichtung aus Fig. 16 im gekoppelten Zustand;
- Fig. 18: eine schematische Darstellung eines fünften Ausführungsbeispiels einer Geschirrspendevorrichtung mit einem Positionssensor vor einem Auslösen des Positionssensors;
- Fig. 19: eine schematische Darstellung des fünften Ausführungsbeispiels der Geschirrspendevorrichtung mit ausgelöstem Positionssensor; und
- Fig. 20: eine schematische Darstellung eines sechsten Ausführungsbeispiels einer Geschirrspendevorrichtung mit einem Sichtfenster.

Gleiche oder funktional äquivalente Elemente sind in allen Figuren mit denselben Bezugszeichen versehen.

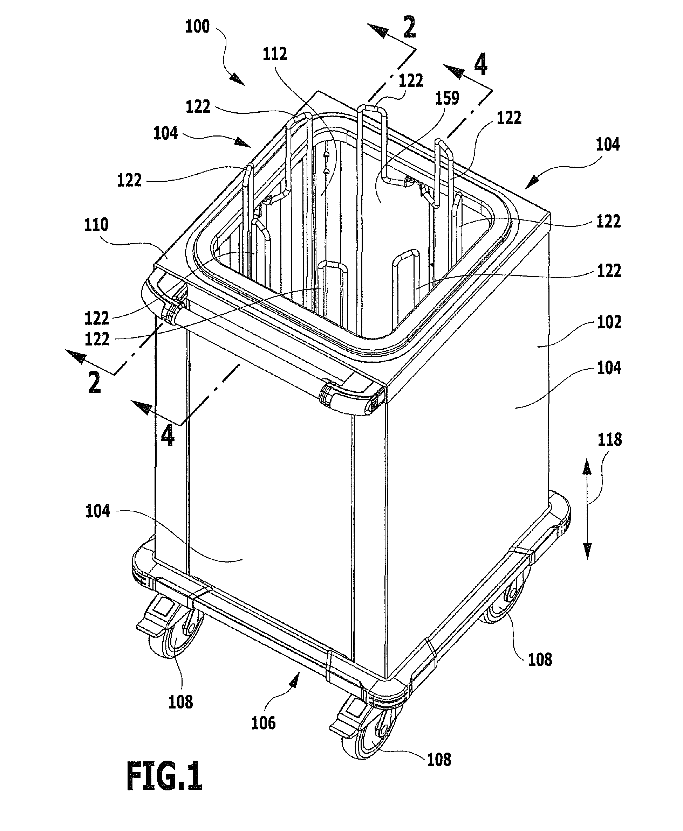

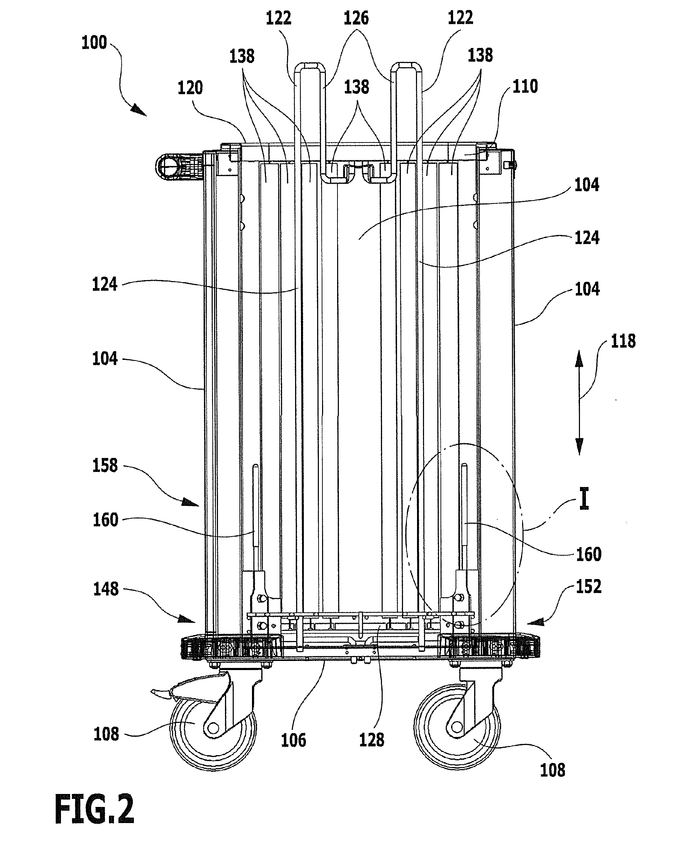

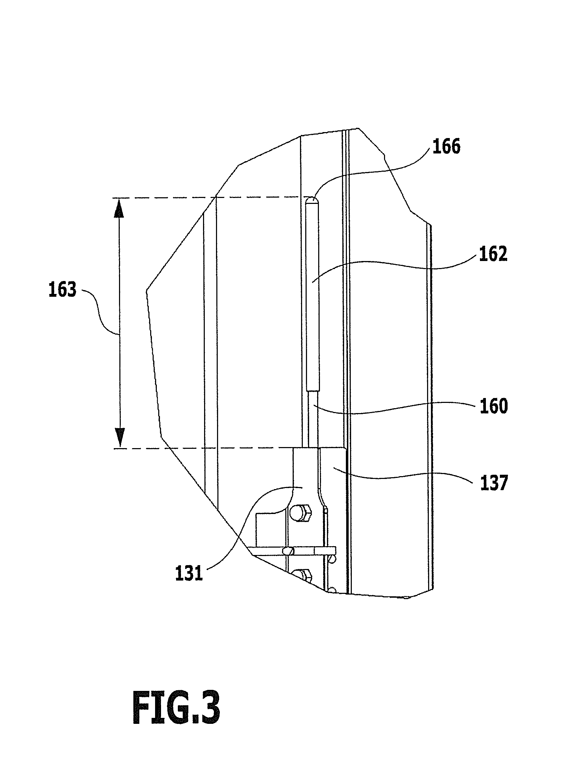

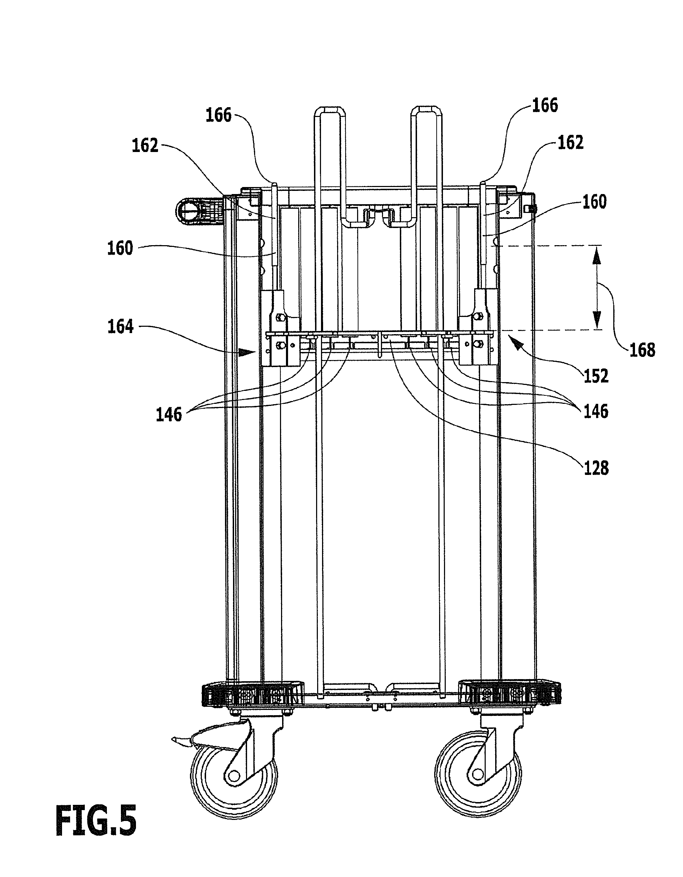

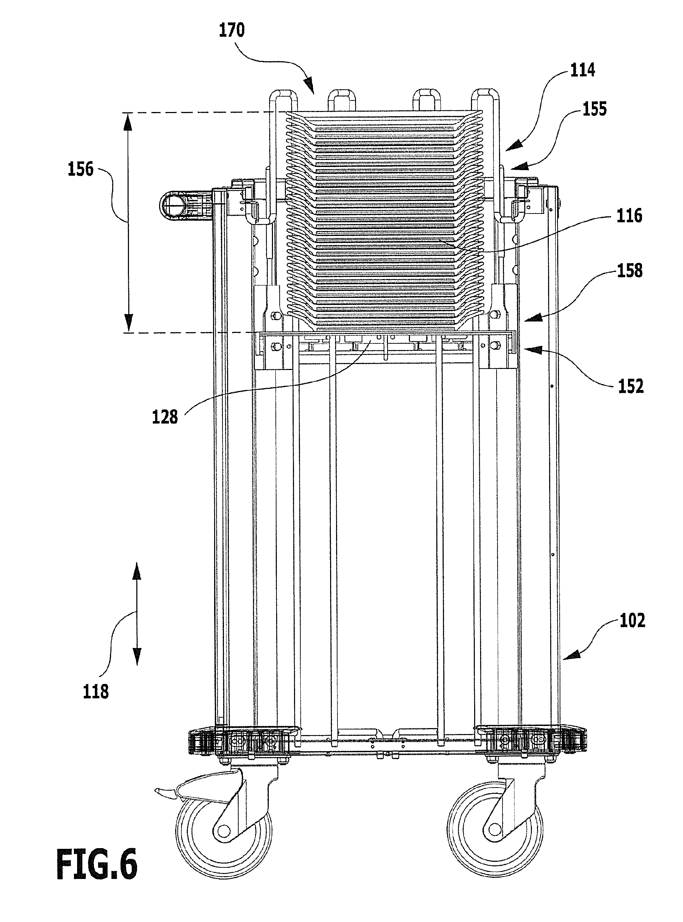

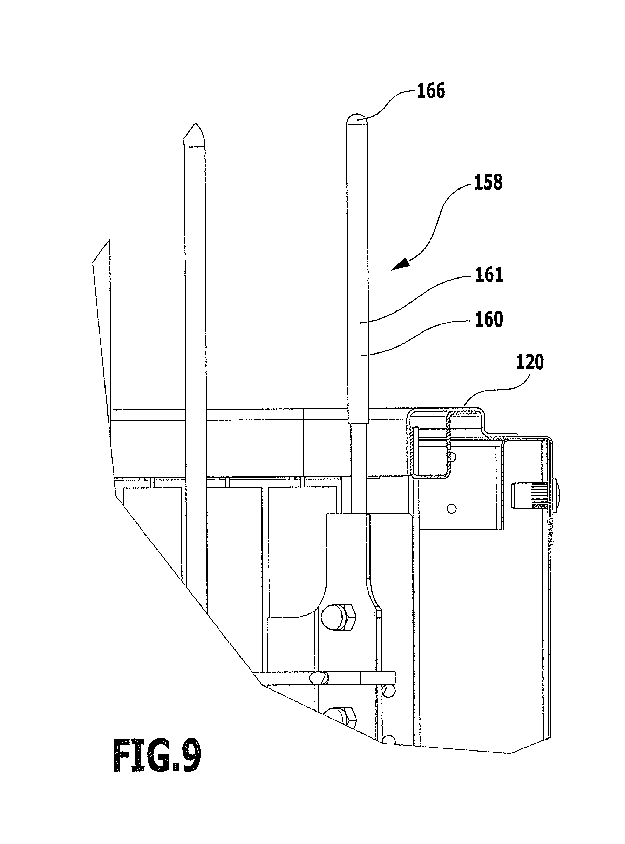

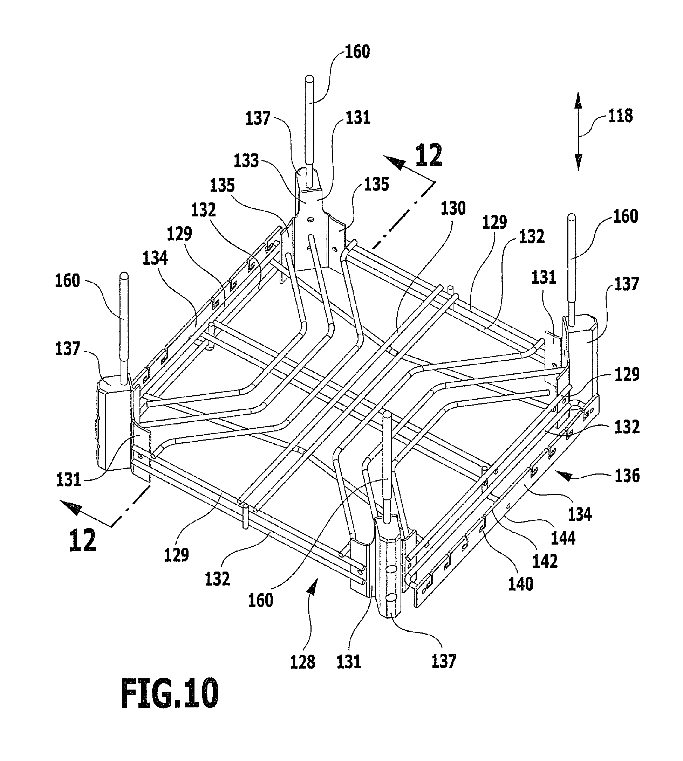

Ein in den Fig. 1 bis 12 dargestelltes erstes Ausführungsbeispiel einer Geschirrspendevorrichtung 100 umfasst ein beispielsweise quaderförmiges Gehäuse 102 mit mehreren, beispielsweise vier, Seitenwänden 104, einem Boden 106, an welchem mehrere, beispielsweise vier, Laufrollen 108 angeordnet sind, und einem dem Boden 106 gegenüberliegenden Deckel 110, welcher wiederum eine Geschirrentnahmeöffnung (im Folgenden als Öffnung 112 bezeichnet) aufweist.

Die Öffnung 112 des Deckels 110 ist groß genug, dass gestapelte Geschirrteile 114, die einen Geschirrstapel 116 bilden, durch die Öffnung 112 treten können.

Die Geschirrteile können beispielsweise Teller, Untertassen, plattenartige oder schalenartige Geschirrteile oder Suppentassen, stapelbare Becher oder Tabletts sein.

Der Boden 106 und der Deckel 110 des Gehäuses 102 sind in einer (vorzugsweise im Wesentlichen vertikalen) Höhenrichtung 118 voneinander beabstandet.

Über eine Oberkante 120 des Deckels 110 ragen mehrere Führungsschienen 120, beispielsweise acht, hinaus.

Die Führungsschienen 122 weisen jeweils einen geraden Führungsabschnitt 124 auf, welcher sich vom Boden 106 des Gehäuses 102 aus in der Höhenrichtung 118 erstreckt und oberhalb der Oberkante 120 des Deckels 110 in einen S-förmigen Endabschnitt 126 übergeht, an dessen Ende die Führungsschiene 122 am Deckel 110 gehalten ist.

Die Führungsschienen 122 dienen dazu, den Geschirrstapel 116 seitlich abzustützen, so dass dieser in der Geschirrspendevorrichtung 100 nicht kippen kann, wenn der Geschirrstapel 116 auf einen Geschirrstapelträger 128 aufgesetzt ist.

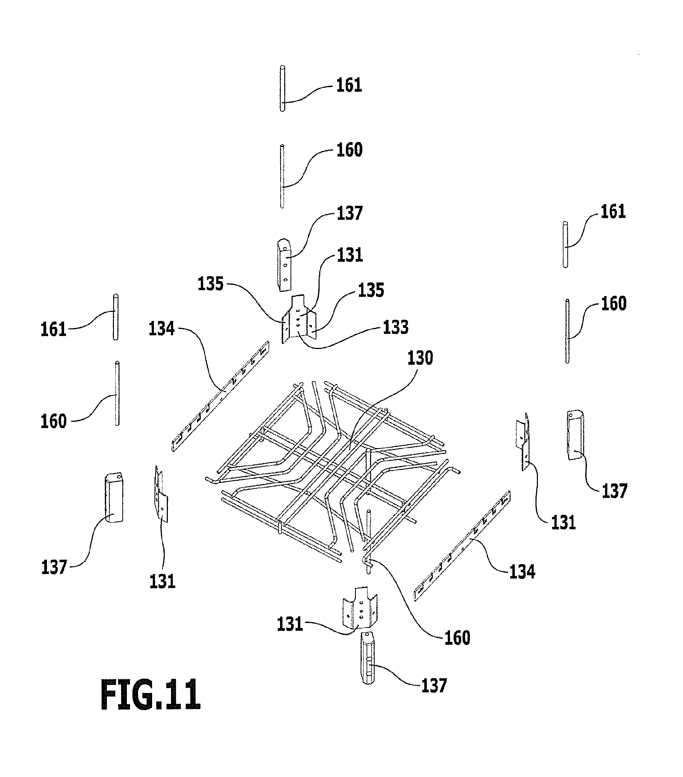

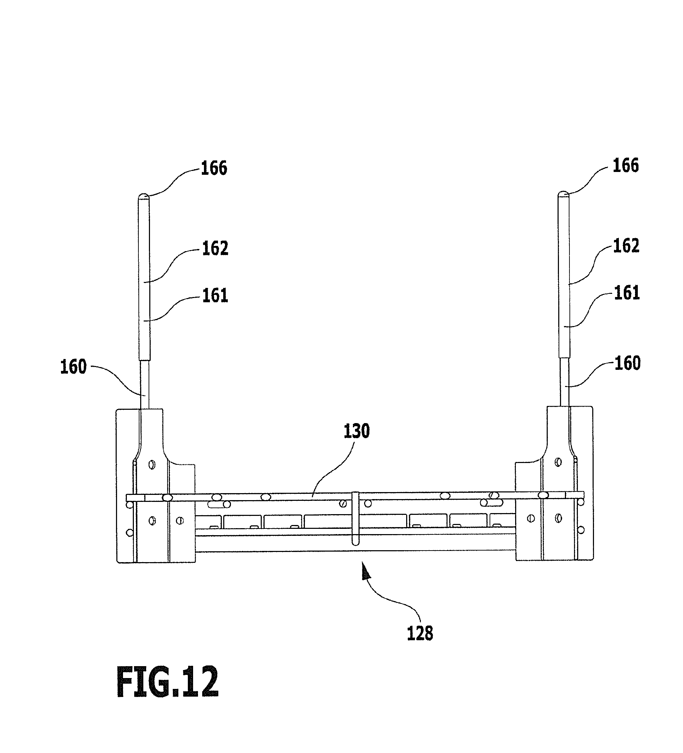

Um den Geschirrstapel 116 tragen zu können, weist der Geschirrstapelträger 128 eine Stapelplattform 130 auf, welche eine beispielsweise quadratische Grundfläche aufweist und als ein Drahtgestell ausgebildet sein kann (siehe insbesondere Fig. 11 und 12).

Die Stapelplattform 130 weist in jeder ihrer Ecken ein Eckprofil 131 auf, das einen Grundkörper umfasst, der einen mittig liegenden Basisabschnitt 133 und zwei daran angrenzende Flügelabschnitte 135 aufweist.

Die beiden Flügelabschnitte 135 sind jeweils um beispielsweise ungefähr 45° zu dem Basisabschnitt 133 abgewinkelt, so dass die beiden Flügelabschnitte in einem Winkel von ungefähr 90° zueinander liegen.

Die Flügelabschnitte 135 jeweils zweier benachbarter Eckprofile 131 sind mittels eines oberen Randstabs 129 und eines unteren Randstabs 132 miteinander verbunden. Diese Randstäbe begrenzen die Fläche der Stapelplattform 130. An der der Stapelplattform 130 abgewandten Seite des Basisabschnitts 133 jedes Eckprofils 131 ist ein Führungselement 137 angeordnet, das einen beispielsweise prismatischen Grundkörper mit einer insbesondere sechseckigen Grundfläche aufweist, wobei beispielsweise die beiden Ecken, die an den Basisabschnitt 133 angrenzen, einen Innenwinkel von ungefähr 90° aufweisen und die übrigen vier Ecken einen Innenwinkel von jeweils ungefähr 135° aufweisen.

An zwei einander gegenüberliegenden unteren Randstäben 132 der Stapelplattform 130 ist jeweils ein Federhalteblech 134 angeordnet. Die Federhaltebleche 134 verlaufen im Wesentlichen parallel zu der jeweils angrenzenden Seitenwand 104.

Die Federhaltebleche 134 weisen Federhalteeinrichtungen 136 auf, beispielsweise jeweils acht, mit denen Tragefedern 138 an den Federhalteblechen 134 festgelegt werden können.

Dazu sind die Federhalteeinrichtungen 136 als Formschlusselemente in Form von Ausnehmungen 140 in dem Federhalteblech 134 gebildet. Die Ausnehmungen 140 erstrecken sich von einem oberen Rand 142 der Federhalteeinrichtung 136 in Richtung eines unteren Randes 144 bis etwa zur Mitte des Federhalteblechs 134 und erstrecken sich von dort aus im Wesentlichen parallel zu dem oberen Rand 142 bis zu einem Knick, von dem aus sich die Ausnehmungen 140 in Richtung des oberen Randes erstrecken, bis zu einem weiteren Knick, von dem aus sich die Ausnehmungen erneut im Wesentlichen parallel zum oberen Rand 142 erstrecken. Die Ausnehmungen bilden somit eine eckige Spirale, die einen Winkel von etwa 270° umfasst.

Die Ausnehmungen 140 bilden somit Formschlusselemente, mittels welchen die Tragfedern 138 durch Formschluss an dem jeweiligen Federhalteblech festgelegt werden können.

Die Tragfedern 138 sind an ihrem einen Ende an dem Deckel 110 festgelegt und weisen an ihrem anderen Ende jeweils eine Einhängevorrichtung 146 auf, die in eine jeweils zugeordnete Federhalteeinrichtung 136 eingehängt werden kann.

Der Geschirrstapelträger 128 ist zwischen einer unteren Höhenposition 148, in welcher der Geschirrstapelträger 128 auf dem Boden 106 aufliegt, und einer oberen Höhenposition 150, in welcher der Geschirrstapelträger 128 an dem Deckel 110 anliegt, beweglich.

Da der Geschirrstapelträger 128 an Tragfedern 138 gehalten ist, die wiederum an dem Deckel 110 gehalten sind, werden die Tragfedern 138 gespannt, wenn der Geschirrstapelträger 128 sich nach unten in Richtung der unteren Höhenposition 148 bewegt, und entspannt, wenn der Geschirrstapelträger 128 sich nach oben in Richtung der oberen Höhenposition 150 bewegt.

Dadurch erzeugen die Tragfedern 138 eine nach oben gerichtete, von der jeweiligen Höhenposition 152 des Geschirrstapelträgers 128 abhängige Tragekraft 154 auf den Geschirrstapelträger 128.

Diese Tragekraft 154 kompensiert die Gewichtskräfte des Geschirrstapels 116 und des Geschirrstapelträgers 128. Der Geschirrstapelträger 128 nimmt jeweils eine solche Höhenposition 152 ein, bei der die Tragekraft 154 die Gewichtskräfte des Geschirrstapels 116 und des Geschirrstapelträgers 128 ausgleicht.

Da die Tragekraft 154 eine Federkraft ist, ist diese proportional zur Längenausdehnung der Tragefedern 138. Ferner ist die Gewichtskraft des Geschirrstapels 116 proportional zur Anzahl der Geschirrteile 114 und damit im Wesentlichen proportional zu einer Höhe des Geschirrstapels 116, so dass bei geeigneter Wahl der Federkonstanten der Tragfedern 138 die Längenausdehnung der Tragfedern 138 im Wesentlichen proportional zu der Höhe des Geschirrstapels 116 ist. Somit kann erreicht werden, dass das jeweilige oberste Geschirrteil 114 in dem Geschirrstapel 116 oberhalb einer Oberkante 120 des Gehäuses 102 liegt, so dass das oberste Geschirrteil 114 leicht aus der Geschirrspendevorrichtung 100 entnommen werden kann.

Dies führt allerdings dazu, dass von außerhalb der Geschirrspendevorrichtung 100 nicht ohne weiteres erkennbar ist, wie viele Geschirrteile 114 in der Geschirrspendevorrichtung 100 gestapelt sind. Um einen Füllstand 156 der Geschirrspendevorrichtung 100 von außerhalb der Geschirrspendevorrichtung 100 erkennbar zu machen, beispielsweise ein Unterschreiten einer Mindestmenge 170 an Geschirrteilen 114 in der Geschirrspendevorrichtung 100, umfasst die Geschirrspendevorrichtung 100 eine Signalgebeeinrichtung 158 zum Geben eines von der Höhenposition 152 des Geschirrstapelträgers 128 und/oder von einer Menge an Geschirrteilen 114 in dem Geschirrstapel abhängigen Signals 155.

Dazu umfasst die Signalgebeeinrichtung 158 beispielsweise mehrere, insbesondere vier, Signalelemente 160, die an dem Geschirrstapelträger 128 angeordnet sind.

Die Signalelemente 160 sind beispielsweise stabförmig ausgebildet, sind jeweils an einem der Führungselemente 137 gehalten und erstrecken sich von diesen aus über eine Länge 163 der Signalelemente 160 in einer Höhenrichtung 118 nach oben. Ein oberer Abschnitt 162 des Signalelements 160 ist mit einer Ummantelung 161, beispielsweise aus einem Kunststoffmaterial, versehen, die eine Signalfarbe, beispielsweise rot, aufweist, so dass das Signalelement gut sichtbar ist.

Im Folgenden wird die Funktionsweise der Signalgebeeinrichtung 158 erläutert.

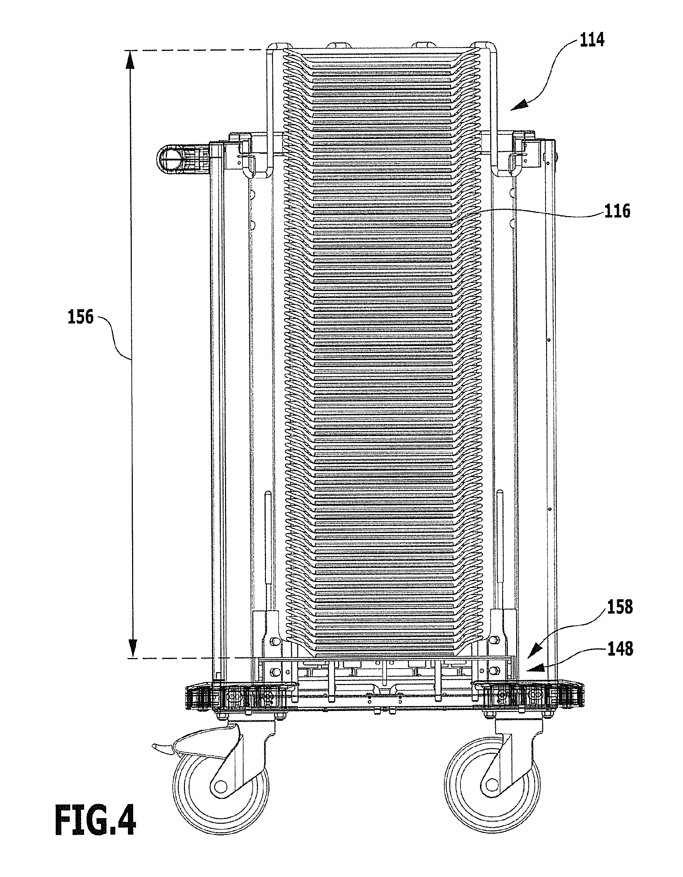

Befindet sich der Geschirrstapelträger 128 in der unteren Höhenposition 148, wie beispielsweise in Fig. 4 dargestellt, sind die Signalelemente 160 vollständig von den Seitenwänden 104 abgedeckt, so dass die Signalelemente 160 von außerhalb der Geschirrspendevorrichtung 100 nicht sichtbar sind.

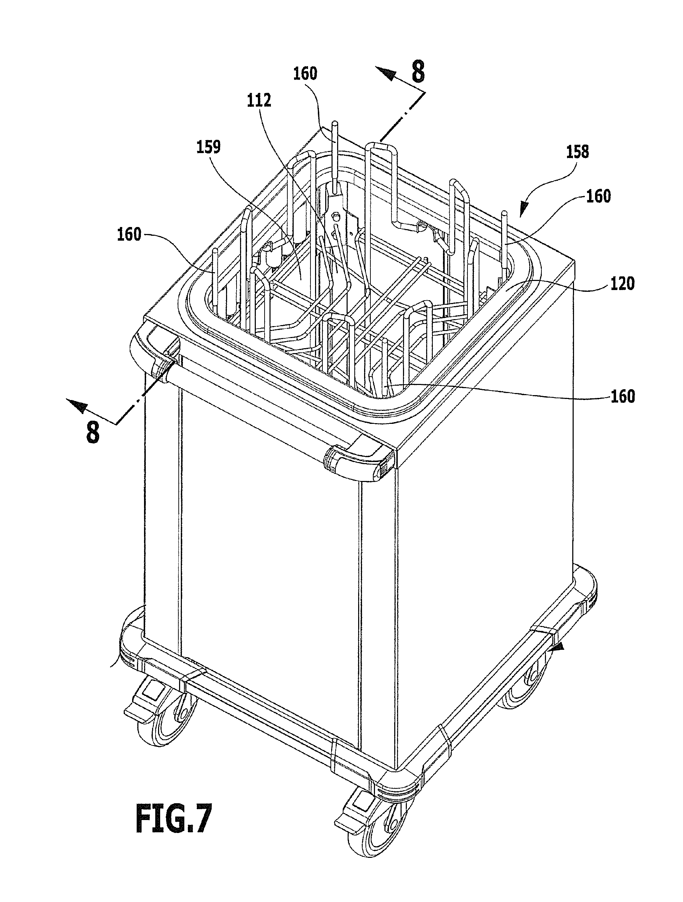

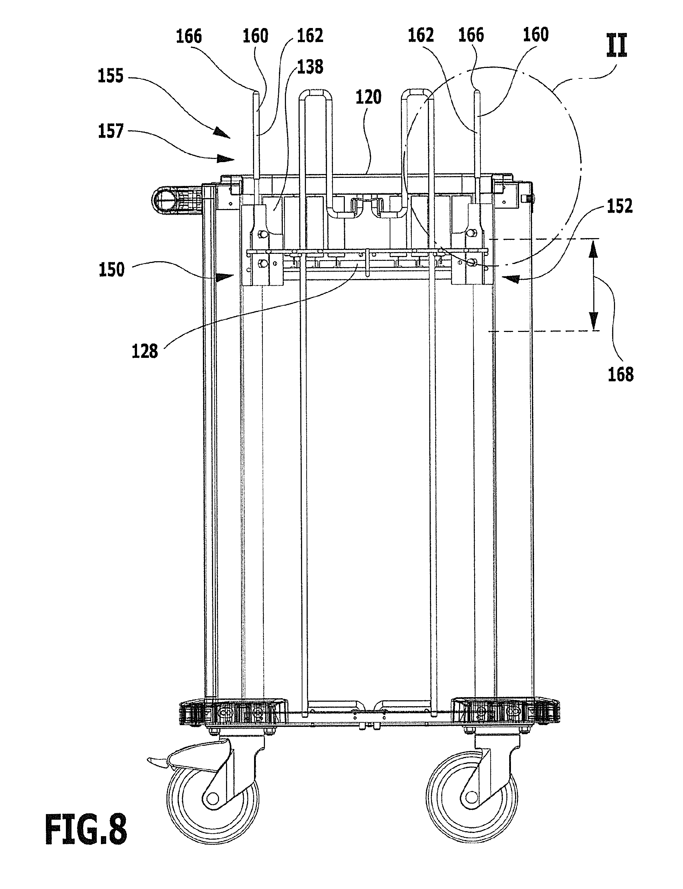

Befindet sich der Geschirrstapelträger 128 dagegen in der oberen Höhenposition 150, wie beispielsweise in den Figuren 7 und 8 dargestellt, durchgreift das Signalelement 160 eine Signalöffnung 159, beispielsweise die Öffnung 112 des Deckels 110, und ragt deutlich über die Oberkante 120 des Deckels 110 heraus, so dass die Signalelemente 160 von außerhalb der Geschirrspendevorrichtung 110 sichtbar sind.

Zwischen der unteren Höhenposition 148 und der oberen Höhenposition 150 liegt eine mittlere Höhenposition 164, die dadurch gekennzeichnet ist, dass dann, wenn der Geschirrstapelträger 128 sich in dieser mittleren Höhenposition 164 befindet, eine Spitze 166 des Signalelements 160 gerade auf der Höhe der Oberkante 120 des Deckels 110 liegt. Somit ist das Signalelement 160 sichtbar, wenn der Geschirrstapelträger 128 sich oberhalb der mittleren Höhenposition 164 befindet, und ist das Signalelement 160 nicht sichtbar, wenn der Geschirrstapelträger 128 sich unterhalb der mittleren Höhenposition 164 befindet.

Die Höhenpositionen des Geschirrstapelträgers 128 von der mittleren Höhenposition 164 bis zu der oberen Höhenposition 150 bilden einen Signalbereich 168. Befindet sich der Geschirrstapelträger 128 innerhalb des Signalbereichs 168, sind die Signalelemente 160 von außerhalb der Geschirrspendevorrichtung 100 sichtbar.

Die Sichtbarkeit der Signalelemente 160 bildet somit ein Füllstandssignal 157, das von der Signalgebeeinrichtung 158 erzeugt wird.

Wie bereits erläutert, hängt die Höhenposition, in welcher der Geschirrstapelträger 128 sich befindet, von der Anzahl der Geschirrteile 114 ab, die im Geschirrstapel 116 gestapelt auf dem Geschirrstapelträger 128 aufgesetzt sind.

Somit wird das Signalelement 160 von außerhalb der Geschirrspendevorrichtung 100 sichtbar, wenn eine vorgegebene Mindestmenge 170 an Geschirrteilen 114 in dem Geschirrstapel 116, der auf dem Geschirrstapelträger 128 aufgesetzt ist, unterschritten wird.

Durch geeignete Wahl der Länge 163 des Signalelements 160 kann die vorgegebene Mindestmenge 170 an Geschirrteilen 140 nach Bedarf eingestellt werden.

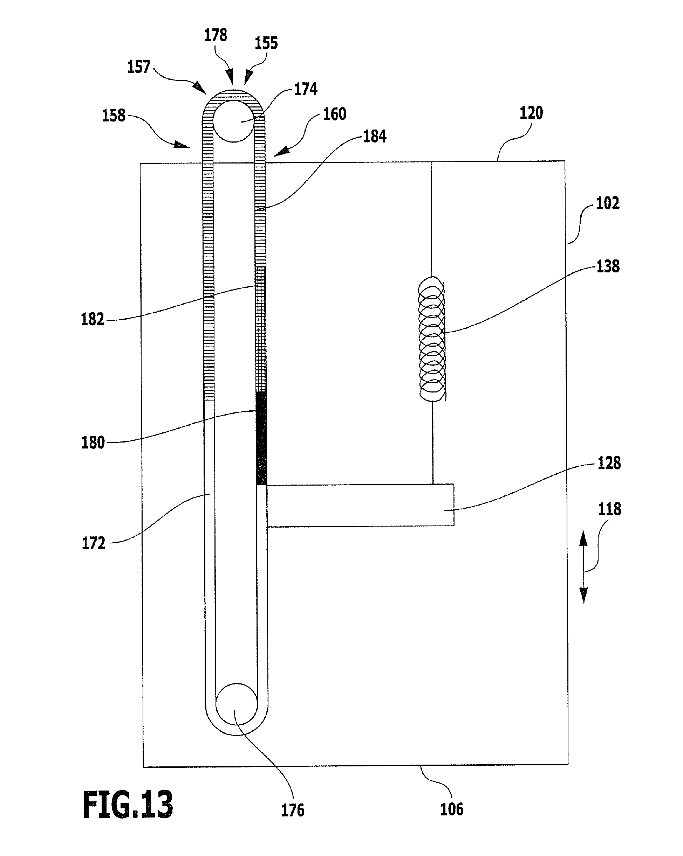

Ein in Fig. 13 dargestelltes zweites Ausführungsbeispiel einer Geschirrspendevorrichtung 100 unterscheidet sich von dem in den Fig. 1 bis 12 dargestellten ersten Ausführungsbeispiel der Geschirrspendevorrichtung 100 dadurch, dass das Signalelement 160 durch ein mit dem Geschirrstapelträger 128 gekoppeltes Signalband 172 gebildet ist.

Das Signalband 172 ist ringförmig ausgebildet und ist um eine obere Umlenkrolle 174 und um eine untere Umlenkrolle 176 umlaufend gespannt. Die untere Umlenkrolle 176 ist in einem unteren Bereich des Gehäuses 102 angrenzend zu dem Boden 106 angeordnet, während die obere Umlenkrolle 174 oberhalb der Oberkante 120 des Deckels 110 angeordnet ist.

Dadurch erstreckt sich das Signalband 172 nahezu über die gesamte Höhe des Gehäuses 102 und ragt über die Oberkante 120 des Deckels 110 hinaus, so dass der über die Oberkante 120 herausragende Abschnitt 178 des Signalbandes 172 von außerhalb der Geschirrspendevorrichtung 100 sichtbar ist.

Aufgrund der Kopplung des Signalbandes 172 mit dem Geschirrstapelträger 128 läuft das Signalband 172 um die Umlenkrollen 174 und 176 um, wenn sich der Geschirrstapelträger 128 in Höhenrichtung 118 aufwärts oder abwärts bewegt, so dass in Abhängigkeit von der Höhenposition 152 des Geschirrstapelträgers 128 jeweils unterschiedliche Abschnitte des Signalbandes 172 oberhalb der Oberkante 120 des Deckels 110 liegen und damit von außerhalb der Geschirrspendevorrichtung 100 sichtbar sind.

Ein Bereich des Signalbandes 172, der angrenzend zu dem Geschirrstapelträger 128 angeordnet ist, ist dann von außen sichtbar, wenn der Geschirrstapelträger 128 sich in der Nähe der oberen Höhenposition 150 befindet. Hingegen ist ein Bereich des Signalbandes 172, der entlang des Signalbandes 172 einen Abstand von dem Geschirrstapelträger 128 aufweist, der dem Abstand zwischen der unteren Höhenposition 148 und der oberen Höhenposition 150 entspricht, dann sichtbar ist, wenn der Geschirrstapelträger 128 sich in der Nähe der unteren Höhenposition 148 befindet.

Das Signalband 172 weist einen ersten Signalabschnitt 180, einen zweiten Signalabschnitt 182 und einen dritten Signalabschnitt 184 auf. Der erste Signalabschnitt 180 erstreckt sich von dem Geschirrstapelträger 128 aus nach oben und ist in einer ersten Signalfarbe, beispielsweise rot, eingefärbt. Dieser erste Signalabschnitt 180 geht nach einer Länge, die der Erstreckung des Signalbereichs 168 in Höhenrichtung 118 entspricht, in einen zweiten Signalabschnitt 182 über, in welchem das Signalband 172 in einer von der ersten Signalfarbe verschiedenen zweiten Signalfarbe, beispielsweise gelb, eingefärbt ist.

Der zweite Signalabschnitt 182 wiederum geht an seinem dem ersten Signalabschnitt 180 abgewandten Ende in einen dritten Signalabschnitt 184 über, der in einer von der ersten und der zweiten Signalfarbe verschiedenen dritten Signalfarbe, beispielsweise grün, eingefärbt ist.

Ist die Geschirrspendevorrichtung 100 ausreichend bis vollständig gefüllt, so liegt der Geschirrstapelträger 128 in der Nähe einer unteren Höhenposition 148, was dazu führt, dass der dritte Signalabschnitt 184 von außen sichtbar ist. In diesem Fall wird von der Signalgebeeinrichtung 158 ein erstes, beispielsweise grünes, Signal 155 gegeben, welches anzeigt, dass die Geschirrspendevorrichtung 100 mit einer ausreichenden Menge von Geschirrteilen 114 bestückt ist.

Nähert sich die Menge an Geschirrteilen 114 der Mindestmenge 170, so liegt der Geschirrstapelträger 128 in der Nähe, aber noch unterhalb der mittleren Höhenposition 164, wodurch der zweite Signalabschnitt 182 des Signalbandes 172 von außen sichtbar ist. Somit wird von der Signalgebeeinrichtung 158 ein zweites, beispielsweise gelbes, Signal 155 gegeben, das anzeigt, dass demnächst nur noch die Mindestmenge 170 von Geschirrteilen 114 vorhanden sein wird.

Befinden sich weniger Geschirrteile 114 in der Geschirrspendevorrichtung 100 als die Mindestmenge 170, so liegt der Geschirrstapelträger 128 innerhalb des Signalbereichs 168, wodurch der erste Signalabschnitt 180 des Signalbandes 172 von außen sichtbar ist. Somit wird von der Signalgebeeinrichtung 158 ein drittes, beispielsweise rotes, Signal 155 gegeben, das anzeigt, dass die Geschirrspendevorrichtung 100 wieder aufgefüllt werden muss.

Im Übrigen stimmt das in der Fig. 13 dargstellte zweite Ausführungsbeispiel der Geschirrspendevorrichtung 100 hinsichtlich Aufbau und Funktion mit dem in den Fig. 1 bis 12 dargestellten ersten Ausführungsbeispiel überein, auf dessen vorstehende Beschreibung insoweit Bezug genommen wird.

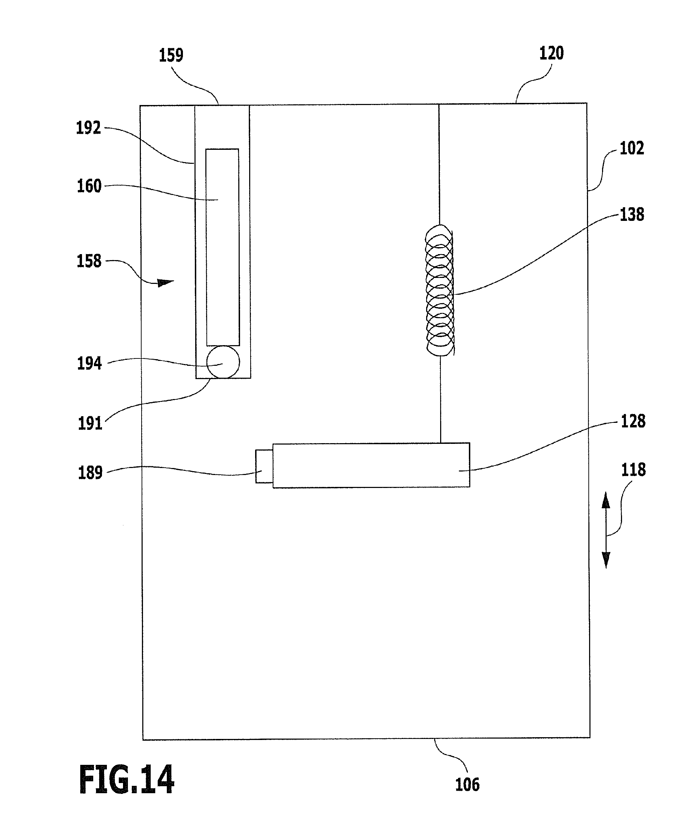

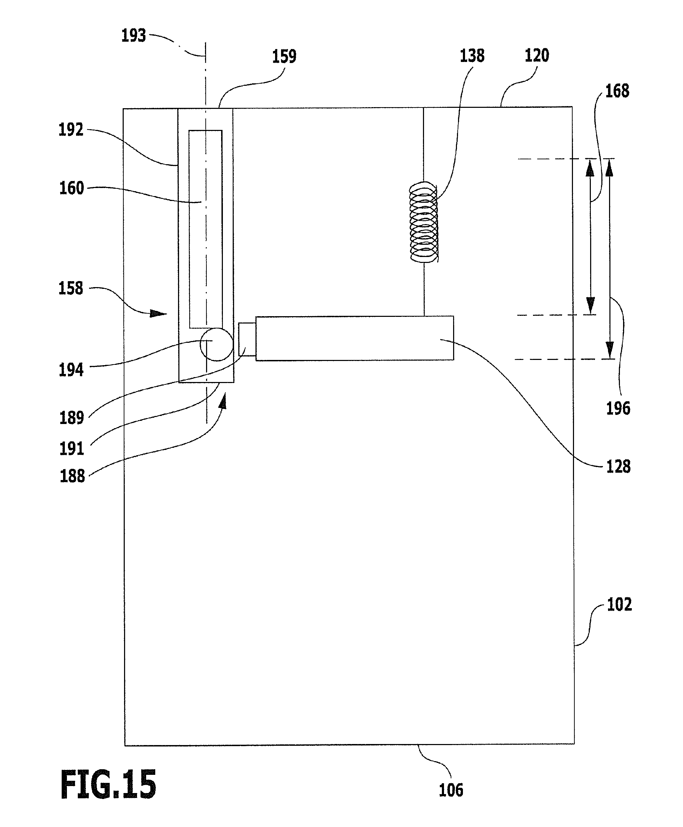

Ein in den Figuren 14 und 15 dargestelltes drittes Ausführungsbeispiel einer Geschirrspendevorrichtung 100 unterscheidet sich von dem in den Fig. 1 bis 12 dargestellten ersten Ausführungsbeispiel der Geschirrspendevorrichtung 100 dadurch, dass die Signalelemente 160 mittels einer Kopplungsvorrichtung 188 mit dem Geschirrstapelträger 128 koppelbar sind, wenn der Geschirrstapelträger 128 sich in dem Signalbereich 168 befindet, und von dem Geschirrstapelträger 128 entkoppelt sind, wenn der Geschirrstapelträger 128 sich außerhalb des Signalbereichs befindet.

Die Kopplungsvorrichtung 188 kann insbesondere ein ein magnetisches Feld erzeugendes erstes Magnetelement 189, beispielsweise einen Permanentmagneten, umfassen.

Das erste Magnetelement 189 kann beispielsweise an dem Geschirrstapelträger 128 angeordnet sein.

Die Signalgebeeinrichtung 158 umfasst beispielsweise mindestens ein stabförmige Signalelement 160, das in einer Röhre 192 angeordnet ist, wobei der Außendurchmesser des Signalelements 160 kleiner als der Innendurchmesser der Röhre 192 ist, so dass sich das Signalelement 160 innerhalb der Röhre 192 entlang einer Längsachse 193 der Röhre 192 bewegen kann.

Die Röhre 192 mündet in eine Signalöffnung 159 des Gehäuses 102 der Geschirrspendevorrichtung 100.

Ferner ist in der Röhre 192 ein beispielsweise kugelförmiges oder zylindrisches zweites Magnetelement 194 unterhalb des Signalelements 160 angeordnet, so dass sich das Signalelement 160 an dem zweiten Magnetelement 194 abstützt.

Das zweite Magnetelement 194 kann aber auch mit dem Signalelement 160 verbunden, beispielsweise in das Signalelement 160 eingegossen, sein.

Das zweite Magnetelement 194 enthält beispielsweise ein magnetisierbares Material, insbesondere Eisen.

Die Röhre 192 ist an der Unterseite mittels eines Röhrenbodens 191 verschlossen.

Die Höhenpositionen des Geschirrstapelträgers 128, in welchen das Signalelement 160 und der Geschirrstapelträger 128 koppelbar sind, bilden einen Kopplungsbereich 196.

Tritt der Geschirrstapelträger 128 von unten in den Kopplungsbereich 196 ein, wird das zweite Magnetelement 194 von dem ersten Magnetelement 189 der Kopplungsvorrichtung 188 angezogen, so dass das zweite Magnetelement 194 anschließend der Bewegung des Geschirrstapelträgers 128 folgt.

Der Kopplungsbereich 196 erstreckt sich mindestens über den gesamten Signalbereich 168, kann aber nach unten über den Signalbereich 168 hinausgehen.

Da das Signalelement 160 auf dem zweiten Magnetelement 194 aufliegt, wird das Signalelement 160 von dem zweiten Magnetelement 194 mitbewegt, so dass das Signalelement 160 ebenfalls der Bewegung des Geschirrstapelträgers 128 folgt.

Somit entspricht die Bewegung des Signalelements 160 des dritten Ausführungsbeispiels der Bewegung des Signalelements 160 des ersten Ausführungsbeispiels, solange der Geschirrstapelträger 128 sich innerhalb des Kopplungsbereichs 196 befindet. Daher kann auf die entsprechenden Ausführungen zum ersten Ausführungsbeispiel Bezug genommen werden, wenn der Geschirrstapelträger 128 sich innerhalb des Kopplungsbereichs 196 befindet.

Tritt der Geschirrstapelträger 128 aus dem Kopplungsbereich 196 aus, liegt das zweite Magnetelement 194 auf dem Röhrenboden 191 auf, so dass das zweite Magnetelement 194 der Bewegung des Geschirrstapelträges 128 nach unten nicht weiter folgen kann.

Bewegt sich der Geschirrstapelträger 128 weiter nach unten, wird der Abstand zwischen dem ersten Magnetelement 189 und dem zweiten Magnetelement 194 größer. Dadurch nimmt die magnetische Anziehungskraft zwischen dem ersten Magnetelement 189 und dem zweiten Magnetelement 194 ab, so dass die Kopplung zwischen den beiden Magnetelementen sich auflöst.

Befindet sich der Geschirrstapelträger 128 sich außerhalb des Kopplungsbereichs 196, so befindet sich das Signalelement 160 vollständig unter der Oberkante 120 des Deckels 110, so dass das Signalelement von außerhalb der Geschirrspendevorrichtung 100 nicht sichtbar ist.

Im Übrigen stimmt das in den Fig. 14 und 15 dargestellte dritte Ausführungsbeispiel der Geschirrspendevorrichtung 100 hinsichtlich Aufbau und Funktion mit dem in den Fig. 1 bis 12 dargestellten ersten Ausführungsbeispiel überein, auf dessen vorstehende Beschreibung insoweit Bezug genommen wird.

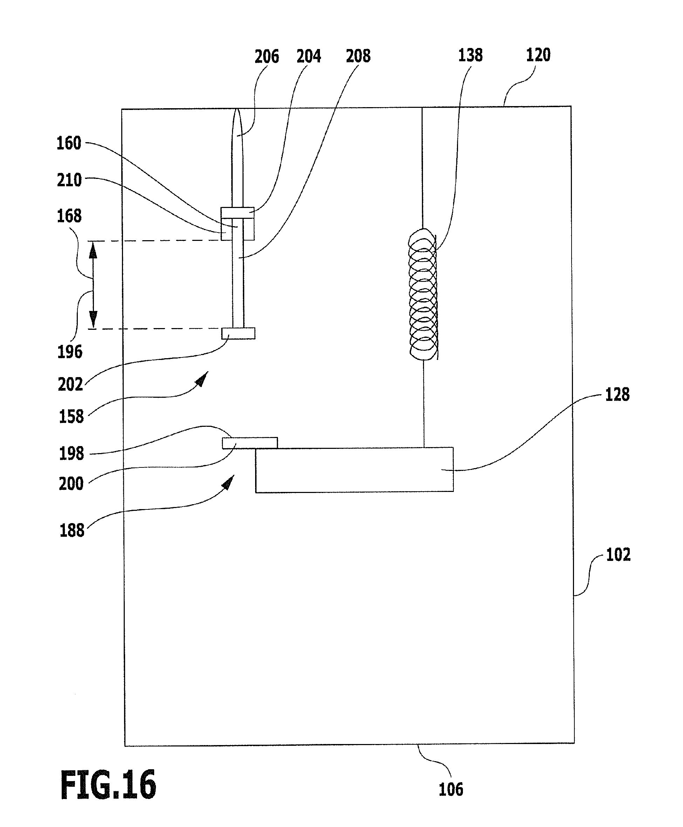

Ein in den Fig. 16 bis 17 dargestelltes viertes Ausführungsbeispiel einer Geschirrspendevorrichtung 100 unterscheidet sich von dem in den Fig. 1 bis 12 dargestellten ersten Ausführungsbeispiel der Geschirrspendevorrichtung 100 dadurch, dass die Signalgebeeinrichtung 158 mindestens ein Signalelement 160 aufweist, welches zeitweise mit dem Geschirrstapelträger 128 gekoppelt ist und dass die Geschirrspendevorrichtung 100 eine Kopplungsvorrichtung 188 zum Koppeln des Signalelements 160 mit dem Geschirrstapelträger 128 aufweist, die ein mechanisches Element 200 aufweist, welches beispielsweise eine Abstützfläche 198 aufweist, an der ein Koppelelement 202 des Signalelements 160 abstützbar ist.

Die Signalgebeeinrichtung 158 weist ein Signalelement 160 auf, das beispielsweise stabförmig ausgebildet ist und an einem Ende ein beispielsweise plättchenförmiges Koppelelement 202 aufweist. Das plättchenförmige Koppelelement 202 und die Auflagefläche 198 liegen in der Höhenrichtung 118 übereinander.

Weiter umfasst das Signalelement 160 einen Anschlagbund 204, der zwischen einem Signalabschnitt 206 und einem Führungsabschnitt 208 des Signalelements 160 angeordnet ist.

Mittels des Anschlagbunds 204 stützt sich das Signalelement 160 auf einem Anschlagelement 210 ab, durch das der stabförmige Führungsabschnitt 208 verläuft.

Der stabförmige Signalabschnitt 206 erstreckt sich von dem Anschlagbund 204 aus gesehen bis zur Oberkante 120 des Deckels 110, wenn das Signalelement 160 mittels des Anschlagbunds 204 auf dem Anschlagelement 210 abgestützt liegt.

Bewegt sich der Geschirrstapelträger 128 von unten nach oben, liegt das Koppelelement 202 auf der Abstützfläche 198 auf, sobald der Geschirrstapelträger 128 in einen Kopplungsbereich 196 eintritt. Innerhalb des Kopplungsbereichs 196 folgt das Signalelement 160 der Bewegung des Geschirrstapelträgers 128. Befindet sich der Geschirrstapelträger 128 unterhalb des Kopplungsbereichs 196, ruht das Signalelement 160 auf dem Anschlagelement 210 und bewegt sich somit nicht mit dem Geschirrstapelträger 128 mit. Dieses Verhalten entspricht dem Verhalten des Signalelements 160 des dritten Ausführungsbeispiels, weshalb diesbezüglich auf die Ausführungen zum dritten Ausführungsbeispiel Bezug genommen wird.

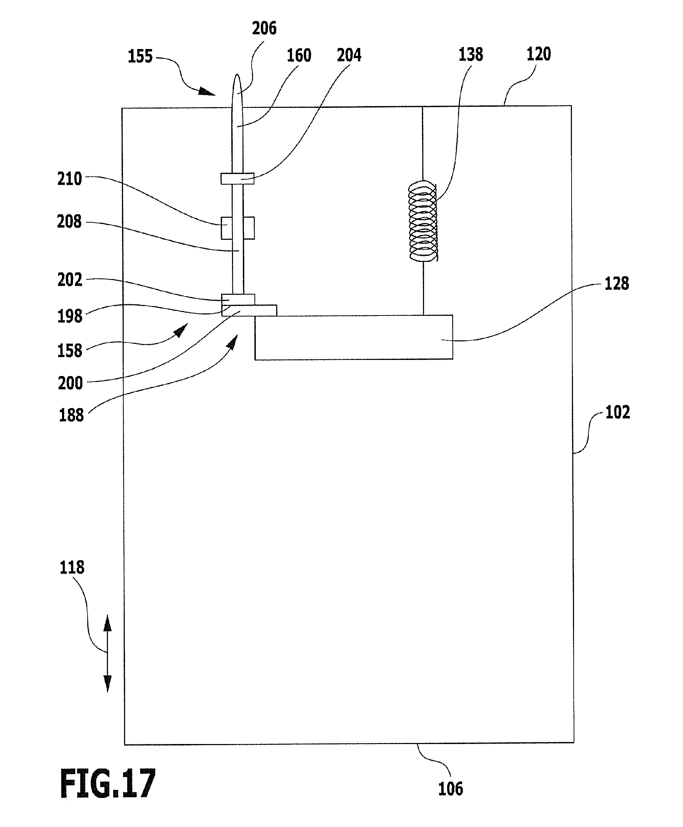

Im Übrigen stimmt das in den Fig. 16 und 17 dargestellte vierte Ausführungsbeispiel der Geschirrspendevorrichtung 100 hinsichtlich Aufbau und Funktion mit dem in den Fig. 1 bis 12 dargestellten ersten Ausführungsbeispiel überein, auf dessen vorstehende Beschreibung insoweit Bezug genommen wird.

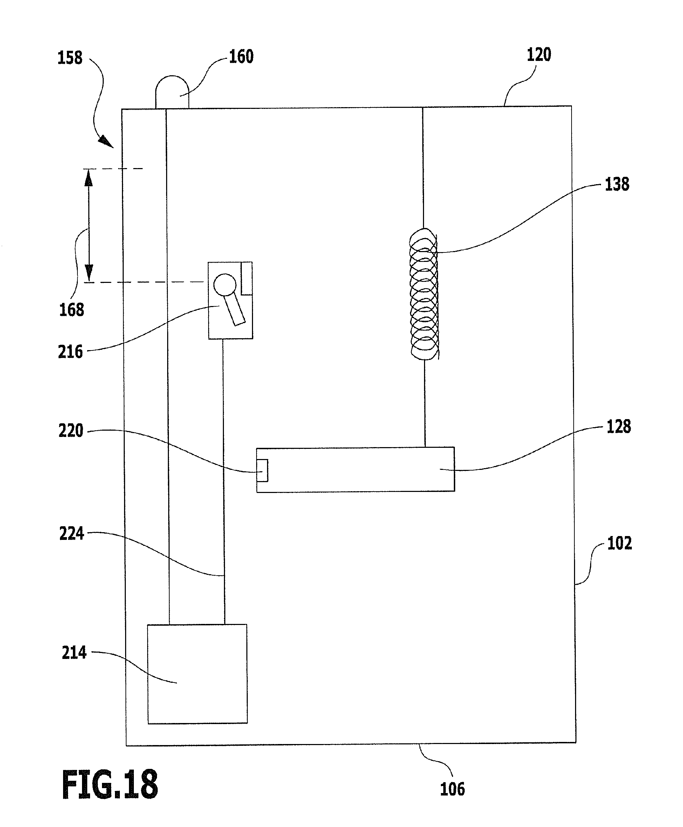

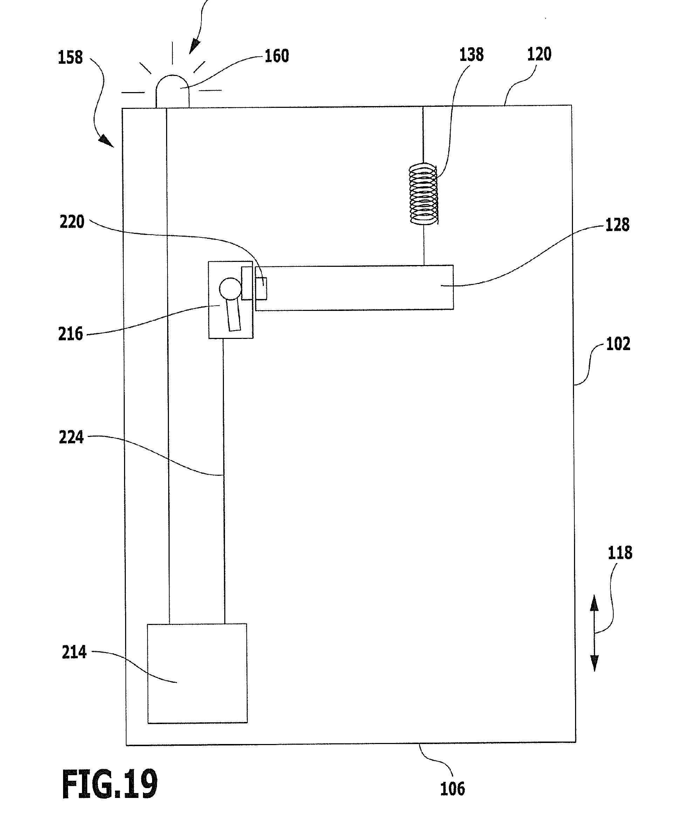

Ein in den Figuren 18 und 19 dargestelltes fünftes Ausführungsbeispiel einer Geschirrspendevorrichtung 100 unterscheidet sich von dem in den Figuren 1 bis 12 dargestellten ersten Ausführungsbeispiel der Geschirrspendevorrichtung 100 dadurch, dass die Signalgebeeinrichtung 158 einen Positionssensor 216 zum Erfassen einer Höhenposition 152 des Geschirrstapelträgers 128 umfasst.

Die Signalgebeeinrichtung 158 umfasst eine Steuereinrichtung 214, den Positionssensor 216 und mindestens ein Signalelement 160.

Der Positionssensor 216 ist beispielsweise als ein Reed-Kontakt ausgebildet, der betätigt wird, wenn ein Magnetelement 220, das am Geschirrstapelträger 128 angeordnet ist, den Positionssensor 216 passiert.

Der Positionssensor 216 ist in einer vorgegebenen Höhenposition 152 angeordnet, so dass der Reed-Kontakt ausgelöst wird, wenn der Geschirrstapelträger 128 eine mittlere Höhenposition 164 überschreitet. Das so erzeugte Signal des Positionssensors 216 wird über eine Steuerleitung 224 an die Steuereinrichtung 214 weitergeleitet, so dass die Steuereinrichtung 214 ein Signalelement 160 steuern kann.

Das von der Steuereinrichtung 214 gesteuerte Signalelement erzeugt ein einmaliges oder andauerndes Signal 155, wenn der Geschirrstapelträger 128 in dem Signalbereich 168 liegt.

Das Signal 155 kann beispielsweise ein optisches, ein akustisches oder ein elektromagnetisches Signal sein.

Ein andauerndes Signal 155 wird beispielsweise durch die Steuereinrichtung 214 gestartet, wenn der Positionssensor 216 ausgelöst wird, und beispielsweise nach einer vorgegebenen Zeitdauer beendet, oder beispielsweise wenn der Positionssensor 216 erneut ausgelöst wird.

Im Übrigen stimmt das in den Fig. 18 und 19 dargestellte fünfte Ausführungsbeispiel der Geschirrspendevorrichtung 100 hinsichtlich Aufbau und Funktion mit dem in den Fig. 1 bis 12 dargestellten ersten Ausführungsbeispiel überein, auf dessen vorstehende Beschreibung insoweit Bezug genommen wird.

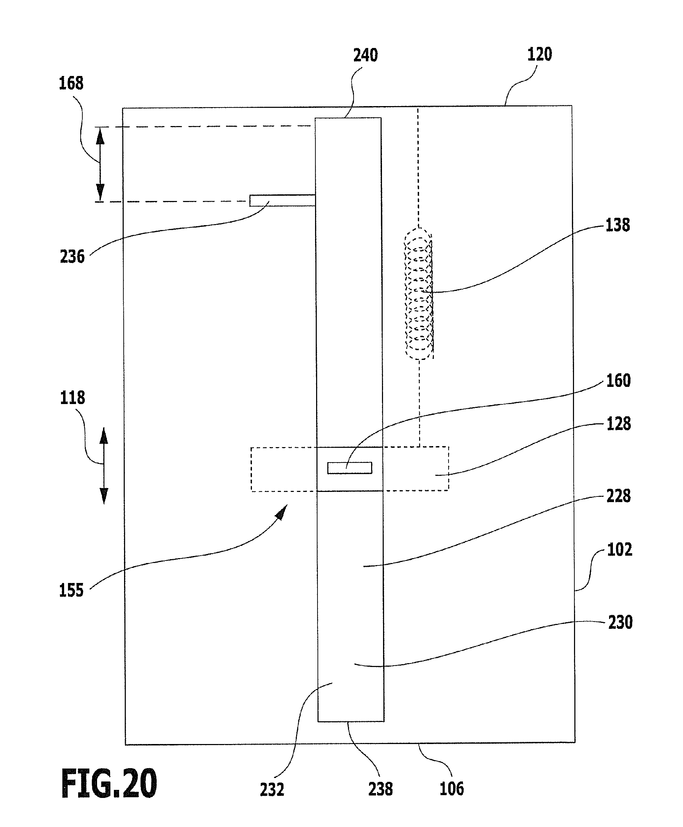

Ein in der Fig. 20 dargestelltes sechstes Ausführungsbeispiel einer Geschirrspendevorrichtung 100 unterscheidet sich von dem in den Fig. 1 bis 12 dargestellten ersten Ausführungsbeispiel der Geschirrspendevorrichtung 100 dadurch, dass die Signalgebeeinrichtung 158 ein Sichtfenster 228 umfasst, durch welches von außerhalb der Geschirrspendevorrichtung 100 der Geschirrstapelträger 128 oder ein Signalelement 160 sichtbar sind.

Die Signalgebeeinrichtung 158 des sechsten Ausführungsbeispiels einer Geschirrspendevorrichtung 100 umfasst das Sichtfenster 228, das beispielsweise durch eine Aussparung 230 in einer der Seitenwände 104 gebildet ist.

Um einen möglichst großen Höhenpositionsbereich, in welchem der Geschirrstapelträger 128 sich befinden kann, sichtbar zu machen, erstreckt sich die Aussparung 230 im Wesentlichen in der Höhenrichtung 118.

Dabei liegt vorzugsweise eine untere Begrenzungskante 238 der Aussparung 230 auf der Höhe der unteren Höhenposition 148 und/oder eine obere Begrenzungskante 240 der Aussparung 230 auf der Höhe der oberen Höhenposition 150, so dass sich die Aussparung 230 insbesondere über den gesamten Bereich zwischen der unteren Höhenposition 148 und der oberen Höhenposition 150 erstreckt.

Die Aussparung 230 ist vorzugsweise mit einer transparenten Abdeckung 232 abgedeckt, beispielsweise einer Plexiglasplatte.

Zur besseren Erkennbarkeit der Höhenposition 152 des Geschirrstapelträgers 128 ist an dem Geschirrstapelträger 128 ein Signalelement 160 angeordnet.

Weiter umfasst die Signalgebeeinrichtung 158 eine Mindestmengenmarkierung 236, die an der Seitenwand 104 neben der Aussparung 230 auf Höhe der mittleren Höhenposition 152 angeordnet ist, so dass es leicht erkennbar ist, ob die Mindestmenge 170 an Geschirrteilen 114 in der Geschirrspendevorrichtung 100 unterschritten ist (wenn nämlich der durch das Sichtfenster 228 sichtbare Geschirrstapelträger 128 sich oberhalb der Mindestmengenmarkierung 236 befindet).

Im Übrigen stimmt das in der Fig. 20 dargestellte sechste Ausführungsbeispiel der Geschirrspendevorrichtung 100 hinsichtlich Aufbau und Funktion mit dem in den Figuren 1 bis 12 dargestellten ersten Ausführungsbeispiel überein, auf dessen vorstehende Beschreibung insoweit Bezug genommen wird.

## Patentansprüche

1. Geschirrspendevorrichtung zur Aufnahme eines Geschirrstapels (116), umfassend ein Gehäuse (102) und einen in einer Höhenrichtung (118) verschiebbaren Geschirrstapelträger (128), auf welchen der Geschirrstapel (116) aufsetzbar ist,
**dadurch gekennzeichnet,**
**dass** die Geschirrspendevorrichtung (100) eine Signalgebeeinrichtung (158) zum Geben eines von der Höhenposition (152) des Geschirrstapelträgers (128) und/oder von einer Menge an Geschirrteilen (114) in dem Geschirrstapel (116) abhängigen Signals (155) umfasst.

2. Geschirrspendevorrichtung nach Anspruch 1, **dadurch gekennzeichnet, dass** die Signalgebeeinrichtung (158) das Signal (155) erzeugt, wenn der Geschirrstapelträger (128) sich in einem Signalbereich (168) befindet.

3. Geschirrspendevorrichtung nach Anspruch 2, **dadurch gekennzeichnet, dass** das von der Signalgebeeinrichtung (158) gegebene Signal (155) ein andauerndes und/oder ein einmaliges Füllstandssignal (157) umfasst, welches die Signalgebeeinrichtung (158) gibt, wenn der Geschirrstapelträger (128) in den Signalbereich (168) eintritt und/oder eine Mindestmenge (170) an Geschirrteilen (114) in dem Geschirrstapel (116) unterschritten wird oder solange der Geschirrstapelträger (128) sich in dem Signalbereich (168) befindet und/oder eine Mindestmenge (170) an Geschirrteilen (114) in dem Geschirrstapel (116) erreicht oder unterschritten ist.

4. Geschirrspendevorrichtung nach einem der Ansprüche 1 bis 3, **dadurch gekennzeichnet, dass** die Signalgebeeinrichtung (158) mindestens ein Signalelement (160) umfasst, welches permanent oder zeitweise mit dem Geschirrstapelträger (128) gekoppelt ist.

5. Geschirrspendevorrichtung nach einem der Ansprüche 1 bis 4, **dadurch gekennzeichnet, dass** die Signalgebeeinrichtung (158) mindestens ein Signalelement (160) umfasst, welches ein mit dem Geschirrstapelträger (128) gekoppeltes Signalband (172) umfasst.

6. Geschirrspendevorrichtung nach einem der Ansprüche 1 bis 5, **dadurch gekennzeichnet, dass** die Signalgebeeinrichtung (158) ein Signalelement (160) umfasst und dass die Geschirrspendevorrichtung (100) eine Kopplungsvorrichtung (188) zum Koppeln des Signalelements (160) mit dem Geschirrstapelträger (128) umfasst.

7. Geschirrspendevorrichtung nach Anspruch 6, **dadurch gekennzeichnet, dass** die Kopplungsvorrichtung (188) mindestens ein erstes Magnetelement (189) aufweist.

8. Geschirrspendevorrichtung nach einem der Ansprüche 6 oder 7, **dadurch gekennzeichnet, dass** die Kopplungsvorrichtung (188) ein mechanisches Element (200) zum mechanischen Koppeln des Signalelements (160) mit dem Geschirrstapelträger (128) umfasst.

9. Geschirrspendevorrichtung nach einem der Ansprüche 1 bis 8, **dadurch gekennzeichnet, dass** die Signalgebeeinrichtung (158) mindestens ein Signalelement (160) umfasst, welches permanent oder zeitweise eine Öffnung (112) des Gehäuses (102) durchgreift, so dass das Signalelement (160) von außerhalb der Geschirrspendevorrichtung (100) sichtbar ist.

10. Geschirrspendevorrichtung nach einem der Ansprüche 2 bis 9, **dadurch gekennzeichnet, dass** die Signalgebeeinrichtung (158) mindestens ein Signalelement (160) umfasst, welches eine Signalöffnung (159) des Gehäuses (102) durchgreift, wenn der Geschirrstapelträger (128) sich in dem Signalbereich (168) befindet.

11. Geschirrspendevorrichtung nach einem der Ansprüche 1 bis 10, **dadurch gekennzeichnet, dass** die Signalgebeeinrichtung (158) zwei oder mehr Signalelemente (160) umfasst.

12. Geschirrspendevorrichtung nach einem der Ansprüche 1 bis 11, **dadurch gekennzeichnet, dass** die Signalgebeeinrichtung (158) mindestens ein Signalelement (160) umfasst, welches an dem Geschirrstapelträger (128) angeordnet ist.

13. Geschirrspendevorrichtung nach einem der Ansprüche 1 bis 12, **dadurch gekennzeichnet, dass** die Signalgebeeinrichtung (158) mindestens ein Signalelement (160) umfasst, welches von außerhalb der Geschirrspendevorrichtung (100) permanent oder zeitweise sichtbar ist.

14. Geschirrspendevorrichtung nach einem der Ansprüche 1 bis 13, **dadurch gekennzeichnet, dass** die Signalgebeeinrichtung (158) einen Positionssensor (216) zum Erfassen der Höhenposition (152) des Geschirrstapelträgers (128) umfasst.

15. Geschirrspendevorrichtung nach einem der Ansprüche 1 bis 14, **dadurch gekennzeichnet, dass** die Signalgebeeinrichtung (158) ein Sichtfenster (228) umfasst, durch welches der Geschirrstapelträger (128) und/oder ein Signalelement (160) von außerhalb der Geschirrspendevorrichtung (100) sichtbar ist.
